Europäisches Patentamt

(19) European Patent Office

Office européen des brevets

(11) Publication number: **0 195 131**
**B1**

# EUROPEAN PATENT SPECIFICATION

(45) Date of publication of the patent specification:
11.04.90

(21) Application number: 85116425.1

(22) Date of filing: 21.12.85

(51) Int. Cl.⁴: **C08K 9/10, C08K 3/02,**
**C01B 25/00**

(54) Stabilized red phosphorus for use as flame-retardant, in particular for compositions on the basis of polymers.

(30) Priority: 19.03.85 IT 1996285

(43) Date of publication of application:
24.09.86 Bulletin 86/39

(45) Publication of the grant of the patent:
11.04.90 Bulletin 90/15

(84) Designated Contracting States:
AT BE CH DE FR GB LI NL SE

(56) References cited:
EP-A- 0 028 744
FR-A- 2 352 024

(73) Proprietor: ITALMATCH S.r.l., Via del Bossi, 4,
I-20121 Milano(IT)

(72) Inventor: Albanesi, Giancarlo, Via Durazzo, 5,
I-20134 Milano (MI)(IT)
Inventor: Rinaldi, Gianfranco, c/o SAFFA S.p.A. Via
Alberto da Giussano, 15, I-20145 Milano (MI)(IT)

(74) Representative: Trupiano, Roberto, BREVETTI EUROPA
S.r.l. Piazza Bernini, 6, I-20133 Milano (MI)(IT)

ACTORUM AG

**Description**

The invention relates to stabilized powder of red phosphorus for use as flame-retardant, in particular for compositions on the basis of polymers, and to a process for the preparation thereof.

The use of red phosphorus (hereinunder also indicated as "red-P")as flame-retardant agent, in particular for materials on the basis of polymers, is known and protected by several Patents, red-P being a really very good fire-proofing agent, and having the advantage of not disturbing to a significant extent the physical-mechanical characteristics of polymers into which it is incorporated.

It is however known that powder of red-P "as such" creates, during the operations for its handling and use, considerable problems of environmental hygiene, of safety, and process problems (equipment corrosion), in that in the presence of air and of steam, red-P undergoes oxidation and disproportioning reactions leading to the formation of phosphine (notoriously very toxic, irritant and spontaneously flammable) and of various oxygen-containing acids of phosphorus, which acids in particular cause drawbacks due to the corrosion of machinery for the processing of plastic materials incorporating said red-P (injection moulding, extrusion and the like), as well as undesired alterations in chemical-physical characteristics of the same plastic materials, in particular in electrical characteristics.

To the purpose of obviating in a more or less efficacious way said environmental hygiene, safety and process problems, which render practically problematical the use of red-P as flame-retardant agent, various methods have been proposed to "stabilize" it (in particular by encapsulating and/or blending it by/with various synthetic resins and/or compounds, in particular oxides, of metals), which methods reduce noticeably, even if not always in a completely satisfactory way, the formation of phosphine and of phosphorus oxygen-containing acids.

So, e.g., U.S. Patent 4 440 880 teaches to stabilize powder of red-P by encapsulating the individual particles thereof with a cationized modified melamine resin, which resin is a polycondensation product of melamine, formaldehyde, triethanolamine and methanol. So encapsulated red-P powder results stabilized, and can be advantageously used as flame-retardant for various compositions on the basis of polymers.

German Patent DE 2623112 teaches in its turn to stabilize powder of red-P by encapsulating the particles thereof with a protective layer of aluminium hydroxide. This method results not much satisfactory in that, to have useful stabilizing effects, large amounts of aluminium hydroxide are to be used, that is undesirable above all in that substantial modifications occur in the characteristics of the products into which the same is incorporated.

To the purpose of improving the stabilizing effects of aluminium hydroxide for red-P, associating to same hydroxide another metal hydroxide, and precisely lead hydroxide, as oxidation stabilizer (U.S. Patent 4,210,630) has been proposed. Moreover, to further increase red-P stability, enveloping has been proposed, in U.S. Patent 4,315,897, red-P powder particles with a thin layer of an oxidation stabilizer constituted by a combination of aluminium hydroxide and of an epoxy resin.

From the above the continuous efforts result evident to find more and more improved solutions suitable to solve the problem of optimum stabilization of red-P to the purpose of making its use, as flame-retardant agent, more and more efficacious and safe.

By the present invention it has now been surprisingly found that the stabilization of powder of red-P can be substantially improved, over the prior art, by coating red-P powder particles with a twofold coating, constituted by aluminium hydroxide, and by a urea-melamine-phenol-formaldehyde resin.

More particularly, stabilized powder of red-P according to the present invention is constituted by red-P particles, having size lower than 200 μm, preferably of about 10-40 μm, individually enveloped inside a capsule of antioxidizer material, which capsule is constituted by a first layer of Al(OH)$_3$ adhering to the surface of red-P individual particles, and by a second layer, superimposed on to said first layer, constituted by a polycondensation resin constituted by urea, melamine, phenol, and formaldehyde, said capsule representing an amount by weight, relatively to red-P enveloped by the same capsule, of 1-12% (preferably of 2.5-5.5%), said Al(OH)$_3$ and said resin being present in amounts by weight, each one relatively to red-P, respectively of 0.2-4% (preferably of 0.5-1.5%), and of 0.8-8.0% (preferably of 2-4%).

Preferred urea-melamine-phenol-formaldehyde resin is, according to the invention, the resin "SELOFORM MUF 63" manufactured by the firm "CHIMICA POMPONESCO S.p.A." of Pomponesco (province of Mantua, Italy).

Preferred, but not exclusive process for encapsulating red-P powder by the twofold antioxidizer layer as above mentioned consists, according to the present invention, in forming a composition constituted by water comprising, homogeneously dispersed, a red-P powder and, dissolved, aluminium sulphate; in adjusting said composition, under stirring, to a pH value around 8-9, so as to make Al(OH)$_3$ precipitate on the individual particles of said red-P powder, which powder, so encapsulated with Al(OH)$_3$, is separated from alkaline mother liquors and then redispersed in water, into which also ammonium chloride and a pre-condensed resin formed by urea-melamine-phenol-formaldehyde resin are dissolved, which resin is then made precipitate and crosslink, on the said pre-encapsulated red-P particles, by increasing the temperature of the thus- obtained composition up to about 90-100°C; and finally separating from said composition, by drying, red-P particles, which result thus encapsulated with a first layer of Al(OH)$_3$, and with a second layer of resin. More particularly, said process consists of following stages:

(a) in preparing a dispersion in water at about 40% of powder of red-P and in adding to said dispersion a solution in water at about 10% by weight of $Al_2(SO_4)_3.18H_2O$, the ratio by weight red-P:$Al_2(SO_4)_3.18H_2O$ being comprised within the range of from 10:1 to 70:1, preferably of 50:1;

(b) in homogenizing the components as under (a) and in adjusting their mixture's pH at a value of about 8 by an alkaline means, preferably aqueous solution at about 10% by weight of $Na_2CO_3$ or of $NH_4OH$, thus causing $Al(OH)_3$ to precipitate on to red-P particles.

(c) in separating (by filtering or the like) the red-P thus encapsulated by $Al(OH)_3$, in washing same red-P with water to remove any residuals of alkalinity, and in redispersing in water said pre-encapsulated and washed red-P, to form a dispersion thereof at about 40% by weight;

(d) in adding to said dispersion, under stirring, an aqueous solution at about 65% by weight of a pre-condensed resin ("syrup") formed by urea- melamine-phenol-formaldehyde, then homogenizing the whole over about half an hour at a temperature of about 80°C, said resin being preferably represented by the resin "SELOFORM MUF 63" by the firm CHIMICA POMPONESCO S.p.A. of Pomponesco (province of Mantua, Italy), such resin being particularly water-resistant, at high temperature too;

(e) in adding to the composition as obtained under (d) an aqueous solution at about 10% of $NH_4Cl$, said $NH_4Cl$ representing about 0.03-0.05% by weight of total solids;

(f) in heating to 90-100°C, under stirring, over about 3 hours, the composition as obtained under (e), thus the end encapsulating being accomplished of red-P powder particles [already pre-encapsulated, as said, by $Al(OH)_3$], with said resin crosslinked around the same particles during the heating stage as above mentioned;

(g) in dehydrating, by vacuum drying at about 100°C (without previous filtering), the encapsulated red-P powder suspension obtained in stage (f), at the end powder of red-P encapsulated by a first layer of $Al(OH)_3$ adherent on to the surface of red-P particles, and by a second layer (superimposed to said first layer) constituted by the above mentioned crosslinked resin being obtained.

The so encapsulated red-P powder results not aggregated, free flowing and very efficaciously stabilized also for environments characterized by high humidity and high temperature values.

The following Examples, given to the purpose of illustrating the invention, and not to limit it, shall better illustrate the same invention.

In said Examples, the stability to oxidation is compared of four samples, constituted by the same red-P powder, stabilized by encapsulation in four different ways, and namely:

-red-P stabilized, with urea-melamine-phenol-formaldehyde resin only (Example 1);

- red-P stabilized, according to the invention, with $Al(OH)_3$ + urea-melamine-phenol-formaldehyde resin (Example 2);

- red-P stabilized with $Al(OH)_3$ + melamine resin, said resin (as according to U.S. Patent 4 440 880) being substantially different from the one selected according to the present invention (Example 3);

- red-P stabilized according to the known art, and i.e., with $Al(OH)_3$ + epoxy resin, according to U.S. Patent 4 315 897 (Example 4).

Summarizing, Examples 3 and 4 are supplied to the purpose of comparing them with Example 2, in order to evidence the considerable technical progress offered by the present invention.

Example 1

Encapsulation of red-P with resin (comparison)

Into a reaction vessel of 1000 ml in capacity, provided with magnetically-driven stirring means, and with electrical heating means, 250 g of powder of red-P in the form of aqueous dispersion at 40% by weight, and 7.5 g of urea-melamine-phenol-formaldehyde resin in form of an aqueous solution at about 65% by weight are charged.

Said red-P powder is constituted by particles with average diameter of about 10-40 μm, and has an iron content of 700 ppm (parts per million by weight), and said resin is resin "SELOFORM MUF 63", supplied by the firm CHIMICA POMPONESCO S.p.A.of Pomponesco (province of Mantua, Italy).

The said components are homogenized with each other under stirring at 80°C over 30 minutes, and then to them 0.1 g are added of ammonium chloride ($NH_4Cl$) in the form of a solution in water at 10% by weight. The resulting mixture is then heated at 90-100°C under stirring over 3 hours, the encapsulating of the particles of red phosphorus powder with said resin crosslinked around the same particles during the said heating stage being so accomplished. The dispersion of encapsulated red-P so obtained is dried under thin layer conditions in oven in vacuo (residual vacuum about 20 mmHg) at 100°C, a stabilized red-P powder being eventually obtained.

The stability to oxidation of red-P stabilized as hereinabove described (as well as red-P stabilized according to the other following Examples) is determined according to "Test 1", as described in Example 1 of U.S. Patent 4 315 897, and namely:

Four hundred fifty grams of water and 1 g of encapsulated red-P are introduced into a three-neck flask provided with a pipe for gas inlet, with a thermometer, with a refluxing condenser and with a magnetic stirrer: the mixture is heated to 80°C, and through it 10 litres/hour of oxygen are flowed, under stirring.

The gas mixture developing through the reflux condenser, consisting of oxygen and phosphine (produced together with oxygen-containing acids of phosphorus, by disproportioning of red phosphorus) is flowed through two scrubbing bottles, placed in series to each other, each one containing 100 ml of an aqueous solution at 2.5% by weight of mercuric chloride.

In this test, phosphine reacts with mercuric chloride according to the equation: $PH_3 + 3HgCl_2 \rightarrow P(HgCl)_3 + 3HCl$

The amount of oxygen-containing acids of phosphorus contained in the aqueous suspension of red phosphorus, and hydrochloric acid contained in the two gas scrubbing bottles are assumed as index of red phosphorus' stability to oxidation. The contents of phosphoric acids and hydrochloric acid are determined by titration.

The values computated from said titrations are reported in Table 1, columns A and B. In column A, the amounts are reported of $PH_3$ (mg of $PH_3$ per phosphorus g per hour) formed during oxidation of red phosphorus. Values in column B are indexes of the acidity of the phosphorus containing aqueous solution, resulting from the formation of phosphorus acids during the oxidation of red phosphorus (mg of KOH per phosphorus g per hour).

Example 2

In the equipment of Example 1, 250 g of powder of red-P (identical to that of Example 1) are charged, as an aqueous dispersion at 40% by weight, as well as 10 g of $Al_2(SO_4)_3.18H_2O$, as an aqueous solution at 10% by weight.

Under stirring, and at room temperature, pH value of the above mixture if adjusted at 8 by means of an aqueous solution at 10% by weight of $Na_2CO_3$, making $Al(OH)_3$ precipitate on to the red-P particles. Red-P so "pre-encapsulated" by the layer of $Al(OH)_3$ is filtered off, is washed with water to remove alkalinity and is then dispersed in water so as to obtain a dispersion at 40% of said pre-encapsulated red-P; after that, the process is carried out exactly as in Example 1 (encapsulating of red-P with resin), in this case particles of red-P being obtained coated, according to the invention, by a capsule constituted by a first layer of $Al(OH)_3$ adhering to the surface of individual particles of red-P and by a second layer (superimposed to the first one) constituted by the crosslinked resin formed by urea-melamine-phenol-formaldehyde.

In Table 1 the results of stability test are reported.

Example 3

The process is carried out as in Example 2 up to the obtaining of aqueous dispersion at 40% of red-P already pre-encapsulated with $Al(OH)_3$, said pre-encapsulated red-P being then encapsulated with the cationized-modified melamine resin as described (as for compositions and production modalities) in Example 1 of U.S. Patent 4 440 880, using 17.3 ml of said resin.

The data relating to the encapsulated red-P so obtained, and related stability to oxidation are reported in Table 1.

Example 4

In the same equipment as of Example 1, 250 g of powder of red-P (identical to that of Example 1) as aqueous dispersion at 30% by weight are charged.

Said suspension is treated with 2.3 g of $Al_2(SO_4)_3.18H_2O$, 0.5 g of Beckopox EP 128 (epoxy resin by Hoechst A.G. of Frankfurt am Main, FRG) and 0.5 g of Beckopox VEH 2130 (aliphatic polyamine by Hoechst A.G., of Frankfurt am Main, FRG), crosslinking said epoxy resin according to the modalities as described in Example 1 of U.S. Patent 4 315 897, eventually a red-P stabilized according to said Patent being obtained, whose data as for composition and stability are reported in Table 1.

From the data appearing in Table 1, the stability to oxidation of red-P encapsulated according to the present invention results surprisingly better than of red-P encapsulated according to the prior art.

Still better results, according to the invention, are obtained when, to practically embody the same invention, a red-P powder with low iron content is selected. In fact, by repeating Example 2 with the only difference that, instead of red-P containing 700 ppm of iron as in said Example, red-P with an iron concentration of only 160 ppm is used, the following data are obtained in stability test:

- A - (mg of $PH_3$/g x hour): $1.20 \times 10^{-2}$

instead of $1.27 \times 10^{-2}$ as in Example 2

- B - (mg of KOH/g x hour): 0.50

instead of 1.49 as in Example 2.

The advantage of selecting red-P powder with low iron content, at least lower than 180 ppm is hence evident.

If Example 2 is repeated a plurality of times, simply varying the amount of aluminium sulphate and of resin, so that stabilizer capsule represents amounts (by weight relatively to red-P) ranging from 1 to 12%, and Al(OH)$_3$ and the resin are present in amounts (by weight, each one relatively to red-P) ranging, respectively, from 0.2 to 4% and from 0.8 to 8%, no meaningful variations in stability of red-P stabilized according to the invention are observed.

EP 0 195 131 B1

**TABLE 1**

| Example | Stabilizers (% by weight relatively to red phosphorus) | A (mg of $PH_3$/g x hour) | B (mg of KOH/g x hour) |
|---|---|---|---|
| 1 | Resin SELOFORM MUF 3 % | $4.68 \times 10^{-2}$ | 14.24 |
| 2 (according to the invention) | Resin SELOFORM MUF 3 % + Al(OH)$_3$ 1 % | $1.27 \times 10^{-2}$ | 1.49 |
| 3 | Melamine resin 3 % + Al(OH)$_3$ 1 % | $3.80 \times 10^{-2}$ | 2.20 |
| 4 | Resin BECKOPOX 0.67% + Al(OH)$_3$ 0.92% | $3.00 \times 10^{-2}$ | 3.32 |

## Claims

1. Stabilized powder of red phosphorus, for a safe use thereof as flame-retardant agent, in particular for compositions on the basis of polymer substances, constituted by particles of red phosphorus enveloped by a thin layer or capsule of antioxidation materials, such as synthetic resins and/or metal oxides and hydroxides, characterized in that

(a) said capsule is composed by a first layer of aluminium hydroxide adhering on to the surface of red phosphorus particles, and by a second layer, superimposed on said first layer, constituted by a polycondensation resin formed by urea-melamine-phenol-formaldehyde;

(b) the amount by weight of said capsule relatively to the red phosphorus encapsulated by the same capsule is comprised within the range of from 1% to 12%;

(c) the amounts by weight, relatively to red phosphorus, of aluminium hydroxide and of said resin are, respectively 0.2-4% and 0.8-8%.

2. Stabilized powder of red phosphorus according to claim 1, characterized in that the amount by weight of said capsule relatively to red phosphorus encapsulated by the same capsule is comprised within the range of from 2.5 to 5.5%, and that the amounts by weight, relatively to red phosphorus, of aluminium hydroxide and of said resin are, respectively, 0.5-1.5% and 2-4%.

3. Red phosphorus according to claim 1, characterized in that said powder of red phosphorus is constituted by particles with average diameter lower than 200 $\mu$m, preferably of about 10-40 $\mu$m, and has an iron content lower than 180 ppm.

4. Process for the production of stabilized powder of red phosphorus constituted by particles of red phosphorus, having dimensions lower than 200 $\mu$m, enveloped by a thin layer of antioxidation material, characterized in that a composition is formed, constituted by water comprising, homogeneously dispersed, a powder of red phosphorus and, dissolved, aluminium sulphate; said composition is adjusted, under stirring, at a pH value of about 8-9, so as to make $Al(OH)_3$ precipitate on individual particles of said powder of red phosphorus, which powder, so pre-encapsulated with $Al(OH)_3$, is separated from alkaline mother liquors and is then redispersed in water, in which also ammonium chloride and a precondensed resin are dissolved, said precondensed resin being formed by urea-melamine-phenol-formaldehyde, which is then made to precipitate and crosslink on the above said pre-encapsulated particles of red phosphorus, by increasing the temperature of the so-obtained composition up to about 90-100°C; and finally separating from said composition the particles of red phosphorus which result thus encapsulated by a first layer of $Al(OH)_3$ and a second layer of resin.

5. Process according to claim 4, characterized in that it comprises

(a) preparing a dispersion in water at about 40% by weight of powder of red-P and adding to said dispersion an aqueous solution at about 10% by weight of $Al_2(SO_4)_3.18H_2O$, the ratio by weight between red-P and $Al_2(SO_4)_3.18H_2O$ being comprised within the range of from 10:1 to 7:1;

(b) homogeneizing the components as under (a) and adjusting their mixture's pH to a value of about 8, thus causing $Al(OH)_3$ to precipitate on the particles of red-P;

(c) separating the powder of red-P so pre-encapsulated with $Al(OH)_3$ in step (b), washing the same with water, and redispersing it in water to form a dispersion thereof at about 40% by weight;

(d) adding to said dispersion, under stirring, an aqueous solution at about 65% by weight of a pre-condensed resin formed by urea-melamine-phenol-formaldehyde, homogenizing the whole over about half an hour at a temperature of about 80°C;

(e) adding to the composition obtained in step (d) an aqueous solution at about 10% of $NH_4Cl$, said $NH_4Cl$ representing about 0.03-0.05% by weight of total solids;

(f) heating at 90-100°C, under stirring, over about 3 hours, the composition obtained in step (e), thus accomplishing the end encapsulating of red phosphorus particles with said resin crosslinked around same particles during the heating operation as above;

(g) dehydrating, by drying in vacuo at about 100°C, the suspension of encapsulated red phosphorus powder obtained in (f), at last powder of red-P encapsulated with a first layer of $Al(OH)_3$ adhering to the surface of red-P particles, and with a second layer, superimposed on said first layer, constituted by the said crosslinked resin being obtained.

## Patentansprüche

1. Stabilisiertes Pulver aus rotem Phosphor, zur sicheren Verwendung als Flammschutzmittel, insbesondere für Zusammensetzungen auf der Basis von Polymersubstanzen, bestehend aus Teilchen aus rotem Phosphor, die durch eine dünne Schicht oder eine Kapsel aus Antioxidationsmaterialien, wie synthetischen Harzen und/oder Metalloxiden und Hydroxiden, eingehüllt sind, dadurch gekennzeichnet, daß

(a) die Kapsel aus einer ersten Schicht aus Aluminiumhydroxid, die an der Oberfläche der Teilchen aus rotem Phosphor haftet, und aus einer die erste Schicht überlagernden zweiten Schicht, bestehend aus einem Polykondensationsharz, gebildet aus Harnstoff-Melamin-Phenol-Formaldehyd, zusammengesetzt ist,

EP 0 195 131 B1

(b) die Größe des Gewichts der Kapsel im Verhältnis zum roten Phosphor, der in dieser Kapsel eingeschlossen ist, in einem Bereich von 1% bis 12% liegt,
(c) die Größe des Gewichts an Aluminiumhydroxid und dem genannten Harz im Verhältnis zum roten Phosphor 0,2–4% bzw. 0,8–8% beträgt.

2. Stabilisiertes Pulver aus rotem Phosphor nach Anspruch 1, dadurch gekennzeichnet, daß die Größe des Gewichts der Kapsel, im Verhältnis zu dem in dieser Kapsel eingeschlossenen roten Phosphor, in einem Bereich von 2,5 bis 5,5% liegt, und daß die Größe des Gewichts, im Verhältnis zum roten Phoshor, an Aluminiumhydroxid und dem genannten Harz 0,5–1,5% bzw. 2–4% beträgt.

3. Roter Phosphor nach Anspruch 1, dadurch gekennzeichnet, daß das genannte Pulver aus rotem Phosphor aus Teilchen mit einem mittleren Durchmesser von unter 200 μm, bevorzugt von etwa 10–40 μm, besteht und einen Eisengehalt von weniger als 180 ppm aufweist.

4. Verfahren zur Herstellung eines stabilisierten Pulvers aus rotem Phosphor, bestehend aus Teilchen von rotem Phosphor mit Abmessungen von unter 200 μm, eingehüllt durch eine dünne Schicht aus einem Antioxidationsmaterial, dadurch gekennzeichnet, daß eine Zusammensetzung gebildet wird, die aus Wasser besteht, das ein homogen dispergiertes Pulver aus rotem Phosphor und gelöstes Aluminiumsulfat enthält, wobei diese Zusammensetzung unter Rühren auf einen pH-Wert von etwa 8–9 eingestellt wird, so daß sich Al(OH)$_3$ auf einzelnen Teilchen des genannten Pulvers aus rotem Phosphor niederschlägt, das so mit Al(OH)$_3$ voreingekapselte Pulver aus der alkalischen Mutterlauge abgetrennt und dann wieder in Wasser dispergiert wird, in dem auch Ammoniumchlorid und ein vorkondensiertes, aus Harnstoff-Melamin-Phenol-Formaldehyd gebildetes Harz gelöst sind, welches dann dazu gebracht wird, sich auf den obengenannten voreingekapselten Teilchen aus rotem Phosphor niederzuschlagen und zu vernetzen, indem die Temperatur der so erhaltenen Zusammensetzung auf etwa 90–100°C erhöht wird, und schließlich aus dieser Zusammensetzung die Teilchen des roten Phosphors abgetrennt werden, die auf diese Weise durch eine erste Schicht aus Al(OH)$_3$ und eine zweite Schicht aus Harz eingekapselt erhalten werden.

5. Verfahren nach Anspruch 4, dadurch gekennzeichnet, daß es umfaßt
(a) das Herstellen einer Dispersion von etwa 40 Gew.-% des Pulvers von rotem P in Wasser und das Zugeben einer wäßrigen Lösung von etwa 10 Gew.-% Al$_2$(SO$_4$)$_3$ · 18 H$_2$O zu der genannten Dispersion, wobei das Gewichtsverhältnis zwischen rotem P und Al$_2$(SO$_4$)$_3$ · 18 H$_2$O in dem Bereich von 10:1 bis 70:1 liegt,
(b) das Homogenisieren der unter (a) genannten Bestandteile und das Einstellen des pH-Werts dieses Gemisches auf etwa 8, wodurch ein Niederschlagen von Al(OH)$_3$ auf den Teilchen des roten P verursacht wird,
(c) das Abtrennen des auf diese Weise mit Al(OH)$_3$ in der Stufe (b) voreingekapselten Pulvers aus rotem P, das Waschen desselben mit Wasser und das nochmalige Dispergieren in Wasser, um eine Dispersion von etwa 40 Gew.-% davon zu bilden,
(d) das Zugeben einer wäßrigen Lösung von etwa 65 Gew.-% eines vorkondensierten, aus Harnstoff-Melamin-Phenol-Formaldehyd gebildeten Harzes unter Rühren zu der genannten Dispersion, das Homogenisieren des Ganzen während etwa einer halben Stunde bei einer Temperatur von etwa 80°C,
(e) das Zugeben einer wäßrigen Lösung von etwa 10% NH$_4$Cl zu der Zusammensetzung, die in der Stufe (d) erhalten wurde, wobei das NH$_4$Cl etwa 0,03–0,05 Gew.-% der gesamten Feststoffe darstellt,
(f) das Erhitzen der in der Stufe (e) erhaltenen Zusammensetzung unter Rühren bei 90–100°C während etwa 3 Stunden, wobei so die Endverkapselung der roten Phosphorteilchen mit dem genannten Harz, das während des obengenannten Heizvorganges um diese Teilchen herum vernetzt wird, erreicht wird,
(g) das Entwässern der Suspension von eingekapseltem rotem Phosphorpulver, das in (f) erhalten wurde, durch Trocknung im Vacuum bei etwa 100°C, wodurch ein eingekapseltes Pulver von rotem P mit einer ersten Schicht aus Al(OH)$_3$, die an der Oberfläche der roten P-Teilchen haftet, und einer diese erste Schicht überlagernden zweiten Schicht, die durch das erhaltene vernetzte Harz gebildet wird, erhalten wird.

**Revendications**

1. Poudre stabilisée de phosphore rouge convenant à un usage sans danger à titre d'agent retardateur de flammes, en particulier pour des compositions à base de substances polymères, constituées de particules de phosphore rouge enveloppées d'une couche fine ou capsule de matière anti-oxydante par exemple des résines synthétiques et/ou des oxydes ou hydroxydes métalliques, caractérisée en ce que
a) ladite capsule est formée d'une première couche d'hydroxyde d'aluminium adhérant à la surface des particules de phosphore rouge et d'une deuxième couche superposée à la première couche constituée d'une résine de polycondensation obtenue à partir d'urée-mélamine-phénol-formaldéhyde;
b) les proportions pondérales capsule/phosphore rouge encapsulé dans ladite capsule sont de l'ordre de 1 à 12%;
c) les proportions pondérales, exprimées par rapport au phosphore rouge, d'hydroxyde d'aluminium et de ladite résine sont respectivement de l'ordre de 0,2–4% et 0,8–8%.

8

2. Poudre stabilisée de phosphore rouge selon la revendication 1, caractérisée en ce que les proportions pondérales capsule/phosphore rouge encapsulé dans ladite capsule sont comprises entre 2,5 et 5,5% et en ce que les proportions pondérales, exprimées par rapport au phosphore rouge, d'hydroxyde d'aluminium et de ladite résine sont respectivement de l'ordre de 0,5–1,5% et 2–4%.

3. Phosphore rouge selon la revendication 1, caractérisée en ce que ladite poudre de phosphore rouge est constituée de particules dont le diamètre moyen est inférieur à 200 µm, et est de préférence d'environ 10 à 40 µm et en ce que sa teneur en fer est inférieure à 180 ppm.

4. Procédé de production de poudre stabilisée de phosphore rouge constituée de particules de phosphore rouge dont les dimensions sont inférieures à 200 µm et qui sont enveloppées d'une fine couche de matière antioxydante, caractérisé en ce que ladite composition est obtenue à partir d'une dispersion aqueuse homogène de poudre de phosphore rouge dans l'eau de dispersion de laquelle est dissout du sulfate d'aluminium; le pH de ladite composition étant porté, sous agitation à une valeur d'environ 8 à 9 de façon à ce que $Al(OH)_3$ forme un précipité sur les particules individuelles de ladite poudre ainsi pré-encapsulée par $Al(OH)_3$, laquelle poudre est séparée des liqueurs alcalines mères puis redispersée dans de l'eau dans laquelle du chlorure d'amonium et une résine précondensée sont dissouts, cette résine précondensée étant formée d'uréemélamine-phénol-formaldéhyde, dont on provoque la précipitation et la réticulation sur les particules pré-encapsulées de phosphore rouge par augmentation de la température de la composition ainsi obtenue à une valeur de l'ordre de 90-100° et enfin par séparation de ladite composition, les particules de phosphore rouge résultantes qui sont de la sorte encapsulées ou revêtues d'une première couche de $Al(OH)_3$ et d'une seconde couche de résine.

5. Procédé selon la revendication 4, caractérisé en ce qu'il comprend:

a) la préparation d'une dispersion dans de l'eau d'environ 40% en poids de poudre de phosphore rouge et l'addition à ladite dispersion d'une solution aqueuse d'environ 10% en poids de $Al_2(SO_4)_3 \cdot 18H_2O$, le rapport pondéral phosphore rouge/$Al_2(SO_4)_3 \cdot 18H_2O$ étant compris entre 10/1 et 70/1;

b) l'homogénéisation des constituants mentionnée dans a) et l'ajustement du pH du mélange à une valeur d'environ 8 de façon à provoquer la précipitation de $Al(OH)_3$ sur les particules de phosphore rouge;

c) la séparation de la poudre de phosphore rouge ainsi pré-encapsulée par $Al(OH)_3$ dans l'étape b), le lavage de cette poudre à l'aide d'eau et sa redispersion dans de l'eau pour former une dispersion contenant environ 40% en poids de ladite poudre;

d) l'addition à ladite dispersion, sous agitation, d'une solution aqueuse contenant environ 65% en poids d'une résine précondensée formée d'urée-mélamine-phénol-formaldéhyde, l'homogénéisation de l'ensemble, en une durée d'environ 1/2 heure, à une température de l'ordre de 80°C;

e) l'addition à la composition obtenue dans l'étape d) d'une solution aqueuse contenant environ 10% de $NH_4Cl$, ledit $NH_4Cl$ formant environ 0,03-0,05% en poids de l'ensemble des solides;

f) le chauffage à 90-100°C sous agitation, pendant environ 3 heures, de la composition obtenue dans l'étape e) de façon à réaliser l'encapsulation finale des capsules de phosphore rouge à l'aide de ladite résine qui se réticule autour desdites particules durant l'étape de chauffage précitée;

g) la déshydratation, par séchage sous vide à environ 100°C de la suspension de poudre de phosphore rouge encapsulé obtenue dans l'étape f), une poudre de phosphore rouge étant encapsulée par une première couche de $Al(OH)_3$ adhérant à la surface des particules de phosphore rouge, et par une seconde couche superposée à ladite première couche et constituée par ladite résine réticulée que l'on a obtenue.